# FASCICULE DE BREVET EUROPEEN

(11) **EP 4 407 218 B1**
(45) Date de publication et mention de la délivrance du brevet: **26.11.2025**
(21) Numéro de dépôt: 24153513.7
(22) Date de dépôt: 23.01.2024
(51) Int. Cl.: F16K 31/04, F16K 11/18, F16H 59/00, F16H 63/00, F16K 31/50, F16K 31/53

(54) **ENSEMBLE DE VANNES A DISPOSITIF D'ACTIONNEMENT MOTORISE COMMUN**
VENTILANORDNUNG MIT GEMEINSAMER MOTORISIERTER BETÄTIGUNGSVORRICHTUNG
VALVE ASSEMBLY WITH COMMON MOTORIZED ACTUATOR

(30) Priorité: 27.01.2023 FR 2300797
(43) Date de publication de la demande: 31.07.2024
(73) Titulaire: Schrader, 25300 Pontarlier (FR)
(72) Inventeur: CHANAL, Thomas, 25300 PONTARLIER (FR)
(74) Mandataire: Novagraaf Technologies

(56) Documents cités:
- WO-A1-2022/242308
- US-A- 3 011 509
- US-A- 3 746 048
- US-A- 4 749 004
- US-B2- 9 458 941

## Description

### Domaine technique de l'invention

La présente invention concerne le pilotage de vannes et notamment le contrôle de l'ouverture et de la fermeture des vannes.

### Arrière-plan technique

Les vannes sont couramment utilisées dans de nombreuses installations, telles que des installations de climatisation et de réfrigération. De telles vannes permettent entre autres de réguler le passage d'un fluide en modifiant par exemple la taille d'un orifice d'entrée du fluide au sein de la vanne. Les vannes participent ainsi à la régulation du débit des fluides au sein de ces installations. Pour ce faire, les vannes sont généralement chacune associées à au moins un dispositif d'actionnement motorisé, assurant leur pilotage.

Cependant de telles vannes à pilotage individuel ont pour inconvénient d'être couteuses à produire puisqu'elles nécessitent chacune l'utilisation d'un dispositif d'actionnement motorisé incluant par exemple un moteur, pour leur pilotage. De plus, l'utilisation d'un dispositif d'actionnement motorisé pour chacune des vannes représente un encombrement important dans les installations au sein desquelles elles sont intégrées.

Le document US4749004 décrit un dispositif à vannes qui relie un conduit d'entrée unique à plusieurs conduits de sortie. Le dispositif comprend un corps collecteur qui assure un passage entre l'entrée et les sorties. Une vanne papillon est positionnée de manière fonctionnelle dans chaque sortie. Un moteur d'entraînement unique est utilisé pour actionner toutes les vannes, chacune d'entre elles fonctionnant indépendamment des autres.

Ainsi, l'invention a pour objet de résoudre les problèmes susmentionnés en proposant un ensemble de plusieurs vannes ayant un dispositif d'actionnement motorisé commun.

L'invention permet alors de réduire les coûts de production de tels ensembles et permet également de réduire l'encombrement de ces ensembles en réduisant le nombre de dispositif d'actionnement motorisé nécessaire à leur pilotage.

### Résumé de l'invention

L'invention propose un ensemble pour la commande de vannes comprenant une platine équipée d'au moins deux unités d'actionnement rotatives prévues pour commander respectivement au moins deux vannes et équipée d'un dispositif d'actionnement motorisé commun à chaque unité d'actionnement rotative, chaque unité d'actionnement rotative comprenant au moins une roue d'actionnement dentée destinée à être entrainée en rotation autour d'un premier axe de rotation et suivant deux sens de rotation opposés, le dispositif d'actionnement motorisé comprenant au moins :
- un arbre moteur autour duquel sont montés coaxialement un organe rotatif et une roue moteur dentée, l'arbre moteur étant mobile en rotation autour d'un deuxième axe de rotation suivant les deux sens de rotation, l'organe rotatif et la roue moteur étant liés en rotation avec l'arbre moteur chacun suivant le premier sens de rotation ou le deuxième sens de rotation,
- au moins un engrenage comprenant au moins une première roue dentée et une deuxième roue dentée liées en rotation et disposées tangentiellement au moins à la roue moteur et de telle sorte qu'au moins l'une de la première roue dentée ou de la deuxième roue dentée soit apte à entrainer en rotation la roue d'actionnement dentée de l'une des vannes,
l'organe rotatif étant configuré de telle sorte qu'il présente au moins trois positions angulaires distinctes suivant le deuxième axe de rotation, dans lesquelles une première position angulaire de l'organe rotatif provoque le déplacement de l'engrenage de telle sorte à entrainer en rotation une roue d'actionnement dentée de l'une des vannes selon le deuxième sens de rotation, une deuxième position angulaire de l'organe rotatif provoque le déplacement de l'engrenage de telle sorte à entrainer en rotation une roue d'actionnement dentée de l'une des vannes selon le premier sens de rotation et une troisième position angulaire de l'organe rotatif provoque une immobilisation rotative de la roue d'actionnement dentée de la vanne considérée.

Selon d'autres caractéristiques de l'invention :
- l'organe rotatif est une came, la came étant liée en rotation avec l'arbre moteur dans le premier sens de rotation de l'arbre moteur et découplée en rotation dans le deuxième sens de rotation de l'arbre moteur, et la roue moteur étant liée en rotation avec l'arbre moteur dans le deuxième sens de rotation et découplée en rotation de l'arbre moteur dans le premier sens de rotation, la came présentant une forme sensiblement circulaire délimitée par un bord périphérique externe et comprenant une surface de commande périphérique,
le dispositif d'actionnement motorisé comprenant au moins deux engrenages, chacun des engrenages comprenant la première roue dentée et la deuxième roue dentée, liées en rotation et disposées tangentiellement à la came et la roue moteur, chacun des engrenages étant associé à l'une des roues d'actionnement dentée de l'une des vannes de telle sorte que :
o au moins la première roue dentée de chacun des engrenages est liée en rotation à la roue d'actionnement dentée de la vanne associée,
o la première roue dentée et la deuxième roue dentée de chacun des engrenages sont mobiles en translation selon des directions radiales, par rapport à l'arbre moteur entre une position active dans laquelle la première roue dentée ou la deuxième roue dentée est engrainée par la roue moteur, et une position passive dans laquelle la première roue dentée ou la deuxième roue dentée est découplée de la roue moteur,
la came étant configurée de telle sorte que la première position angulaire de la came positionne la première roue dentée en position active, la deuxième position angulaire de la came positionne la deuxième roue dentée en position active, et la troisième position angulaire de la came positionne la première roue dentée et la deuxième roue dentée en position passive ;
- la surface de commande périphérique de la came est un dégagement périphérique de matière formant une encoche ;
- chacune de la première roue dentée et de la deuxième roue dentée de chacun des engrenages est associée en rotation respectivement à un premier arbre et un deuxième arbre, la platine comprenant des lumières oblongues dans lesquelles s'étendent un des premiers ou deuxièmes arbres et de telle sorte à autoriser le déplacement radial desdits arbres par rapport à la platine et selon le deuxième axe de rotation ;
- l'ensemble comprend au moins un support mobile en translation configuré pour supporter au moins la première roue dentée et la deuxième roue dentée d'au moins un des engrenages et de telle sorte qu'il autorise le déplacement en translation radiale du premier arbre et du deuxième arbre dans leur lumière oblongue respective ;
- le support comprend au moins un ergot qui s'étend en regard de l'une des roues dentées portée par le support et de telle sorte que ledit ergot soit au contact du bord périphérique externe de la came ;
- chacune des premières roues dentées de chacun des engrenages est portée par le support et par un doigt autorisant le déplacement en translation radiale du premier arbre dans la lumière oblongue associée, le doigt comprenant au moins un ergot qui s'étend radialement de telle sorte qu'il soit en contact du bord périphérique externe de la came ;
- l'ergot du support s'étend radialement en regard de la deuxième roue dentée et l'ergot du doigt s'étend radialement en regard de la première roue dentée de chacun des engrenages ;
- par rapport à l'un des engrenages, la première position angulaire de la came correspond au contact de l'encoche de la came avec l'ergot du doigt ; la deuxième position angulaire de la came correspond au contact de l'encoche de la came avec l'ergot du support, et la troisième position angulaire de la came correspond au contact du bord périphérique externe de la came, distinct de l'encoche, avec l'ergot du support et l'ergot du doigt ;
- le dispositif d'actionnement motorisé comprend au moins un élément d'appui élastique disposé en contact tangentiel au moins avec le support des roues dentées de telle sorte à plaquer ledit support contre le bord périphérique externe de la came ;
- l'élément d'appui élastique est un ressort à lame.

L'invention porte aussi sur un procédé de pilotage d'un ensemble selon l'une quelconque des caractéristiques précédentes, comprenant au moins :
- une étape préliminaire de sélection de l'unité d'actionnement rotative et du sens de rotation désiré de la roue d'actionnement dentée associée,
- une première étape au cours de laquelle l'arbre moteur est entrainé en rotation selon le premier sens de rotation de telle sorte à déplacer angulairement la came autour du deuxième axe de rotation selon le premier sens de rotation suivant l'une de ses positions angulaires, en fonction du sens de rotation désiré de la roue d'actionnement dentée de l'étape préliminaire,
- puis une deuxième étape au cours de laquelle l'arbre moteur est entrainé en rotation selon le deuxième sens de rotation de telle sorte à entrainer en rotation la roue moteur selon le deuxième sens de rotation et ainsi entrainer en rotation la roue d'actionnement dentée de l'unité d'actionnement rotative de l'étape préliminaire suivant le premier sens de rotation ou le deuxième sens de rotation choisi à l'étape préliminaire et via la position angulaire de la came de la première étape.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] est une vue générale en perspective d'un ensemble comprenant quatre vannes et un dispositif d'actionnement motorisé commun selon l'invention ;
[Fig.2] est une vue en perspective en éclatée de l'ensemble de la figure 1 montrant une partie du dispositif d'actionnement motorisé ;
[Fig.3] est une vue de dessus de l'ensemble de la figure 1 qui illustre une roue moteur et des engrenages du dispositif d'actionnement motorisé et leur coopération avec une unité d'actionnement rotative de chacune des vannes ;
[Fig.4] est une vue de dessus de l'ensemble de la figure 1 dans lequel la roue moteur et les engrenages ont été retirés pour illustrer une came du dispositif d'actionnement motorisé participant au pilotage de l'unité d'actionnement rotative de chacune des vannes ;
[Fig.5] est une vue en coupe selon un plan A-A de l'ensemble de la figure 1 qui montre l'agencement des engrenages et un arbre moteur du dispositif d'actionnement motorisé ;
[Fig.6] est une vue en coupe selon un plan B-B de l'ensemble de la figure 1 qui montre l'agencement des vannes et de leur unité d'actionnement rotative ;
[Fig.7a] est une vue de détail de la came du dispositif d'actionnement motorisé lorsqu'elle se positionne dans une première position angulaire ;
[Fig.7b] est une vue de détail de la came du dispositif d'actionnement motorisé lorsqu'elle se positionne dans une deuxième position angulaire ;
[Fig.7c] est une vue de détail de la came du dispositif d'actionnement motorisé lorsqu'elle se positionne dans une troisième position angulaire ;
[Fig.8a] est une vue de détail de la roue moteur du dispositif d'actionnement motorisé, d'un des engrenages et leur coopération lorsque la came du dispositif d'actionnement motorisé est dans la première position angulaire de la figure 7a ;
[Fig.8b] est une vue de détail de la roue moteur du dispositif d'actionnement motorisé, d'un des engrenages et leur coopération lorsque la came du dispositif d'actionnement motorisé est dans la deuxième position angulaire de la figure 7b ;
[Fig.8c] est une vue de détail de la roue moteur du dispositif d'actionnement motorisé, d'un des engrenages et leur coopération lorsque la came du dispositif d'actionnement motorisé est dans la troisième position angulaire de la figure 7c.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal.

Dans la description qui va suivre, des éléments identiques, similaires ou analogues seront désignés par les mêmes chiffres de référence.

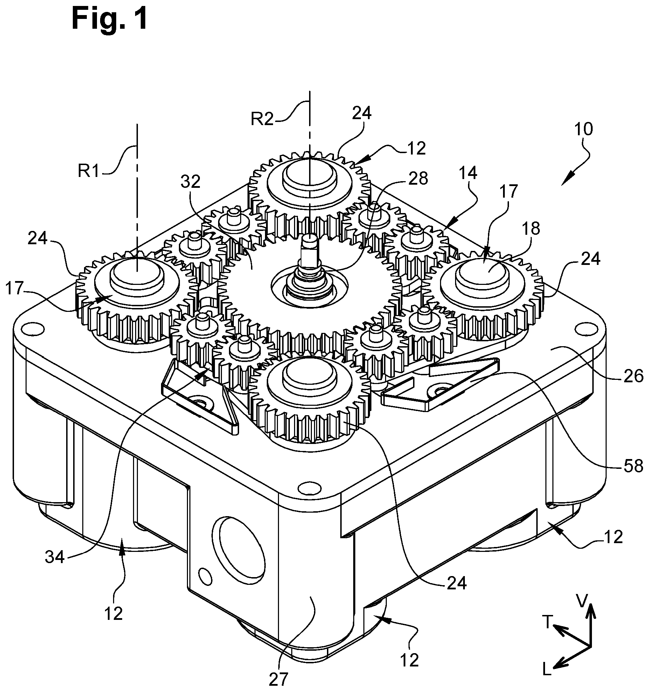

La figure 1 illustre un ensemble 10 selon un exemple de l'invention, comprenant quatre vannes 12 et un dispositif d'actionnement motorisé 14 commun.

Selon l'exemple de l'invention illustré, l'ensemble 10 comprend quatre vannes 12, mais on comprend que l'invention s'applique *mutatis mutandis à* un ensemble 10 comprenant au moins deux vannes 12 ou plus.

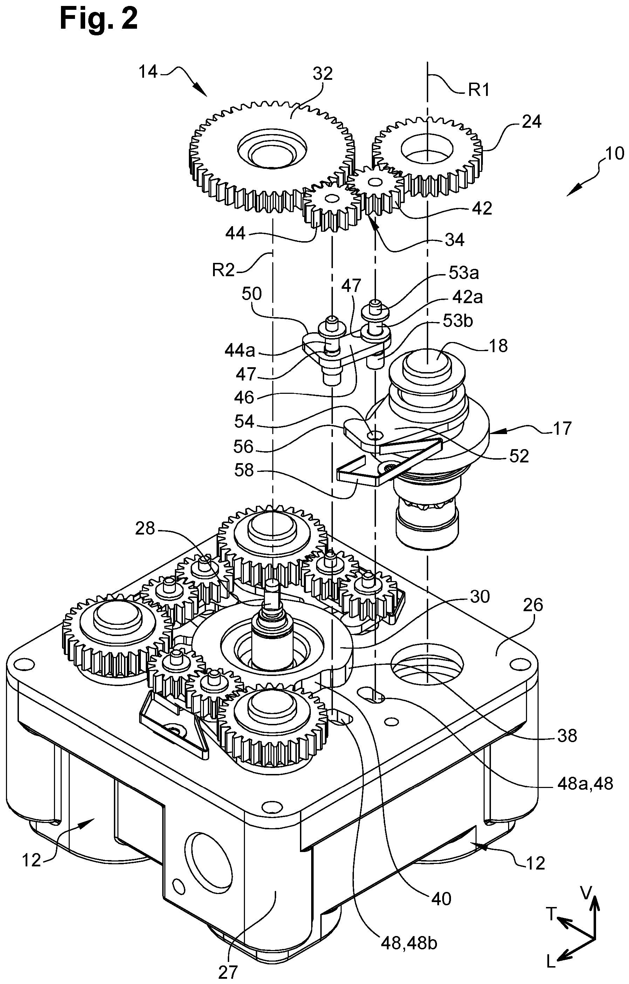

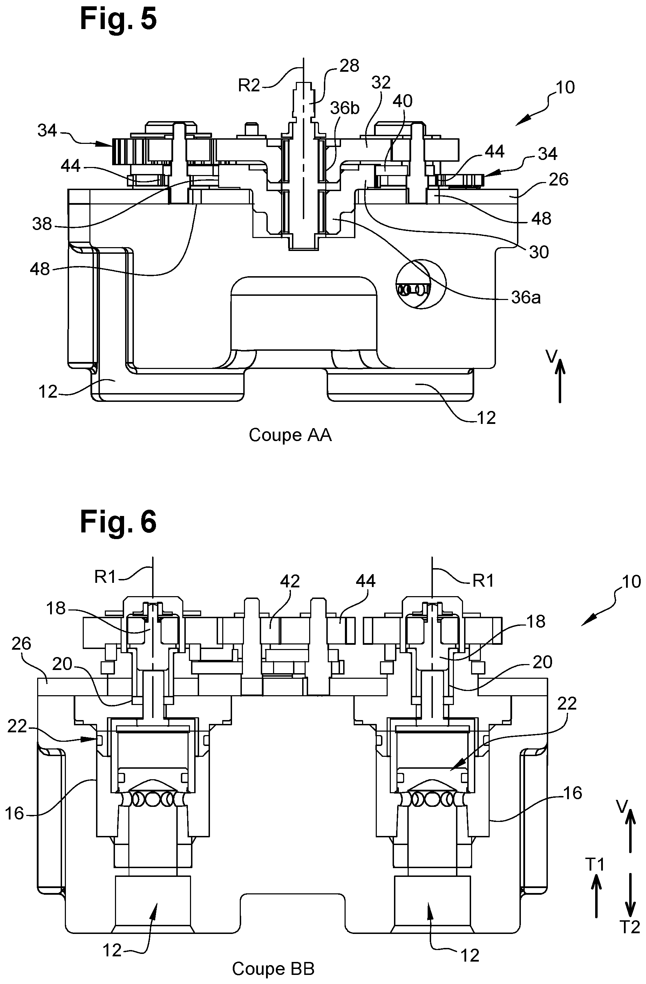

Les vannes 12 selon l'exemple illustré de l'invention, et visibles aux figures 2 et 6, comprennent chacune au moins un corps principal 16 qui s'étend selon une direction d'allongement principal verticale V, et une unité d'actionnement rotative 17.

Plus particulièrement, chaque unité d'actionnement rotative 17 comprend au moins un arbre 18 qui s'étend verticalement dans le corps principal 16. L'arbre 18 définit un premier axe de rotation R1 et est apte à être entrainé en rotation dans un logement 20.

L'arbre 18 est notamment en liaison vis-écrou avec un organe de contrôle 22 du passage d'un fluide.

De manière plus précise, le corps principal 16 de la vanne 12 comprend au moins une ouverture d'entrée et une ouverture de sortie, ici non visibles, du fluide dans le corps principal 16 de la vanne 12, le passage ou non du fluide au travers desdites ouvertures étant contrôlé par l'organe de contrôle 22 du passage du fluide. De manière encore plus précise, l'organe de contrôle 22 du passage du fluide est destiné à translater verticalement dans le corps principal 16 de telle sorte à ouvrir ou fermer plus ou moins l'ouverture d'entrée et l'ouverture de sortie du fluide.

On comprend alors que la rotation de l'arbre 18 dans son logement 20 entraine la translation verticale de l'organe de contrôle 22 de passage de fluide auquel il est relié par la liaison vis-écrou.

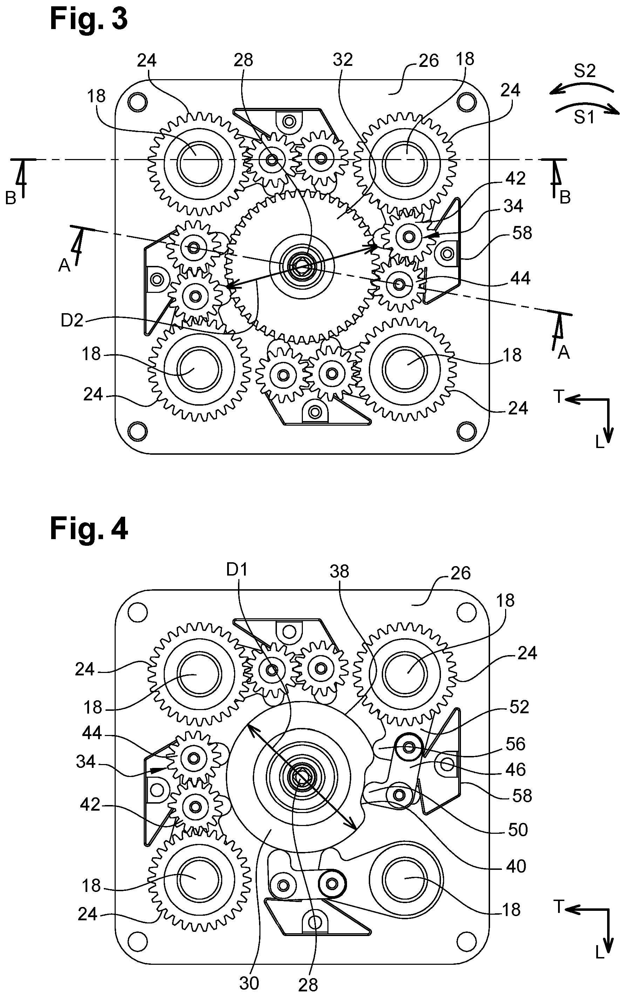

Par ailleurs, on comprend que la rotation de l'arbre 18 autour du premier axe de rotation R1, selon un premier sens de rotation S1 ou un deuxième sens de rotation S2, visibles à la figure 3, translate l'organe de contrôle 22 de passage du fluide suivant respectivement un premier sens de translation T1 ou un deuxième sens de translation T2, opposés l'un à l'autre selon la direction verticale V et visibles à la figure 6.

Ainsi, le premier sens de translation T1 déplace l'organe de contrôle 22 de telle sorte à ouvrir l'ouverture d'entrée du fluide et le deuxième sens de translation T2 déplace l'organe de contrôle 22 de telle sorte à fermer l'ouverture d'entrée du fluide.

Selon un exemple non limitatif de l'invention, le premier sens de rotation S1 correspond à un sens horaire et le deuxième sens de rotation S2 correspond à un sens anti-horaire.

Par ailleurs, chaque unité d'actionnement rotative 17 comprend au moins une roue d'actionnement dentée 24 liée en rotation avec l'arbre 18 et ainsi destinée à être entrainée en rotation autour du premier axe de rotation R1.

De manière plus précise, selon un mode de réalisation avantageux, la transmission du couple entre la roue d'actionnement dentée 24 et l'arbre 18 s'effectue par une liaison magnétique.

Par exemple et de manière non limitative, chaque roue d'actionnement dentée 24 peut comprendre une portion interne aimantée destinée à coopérer magnétiquement avec un rotor interne, lié en rotation avec l'arbre 18, le rotor interne comprenant une portion périphérique externe aimantée.

Une paroi métallique, non aimantée, recouvre alors au moins le rotor de telle sorte à isoler fluidiquement chacune des roues d'actionnement dentée 24 de chacune des vannes 12 au moins du rotor et de l'arbre 18 associés.

Une telle liaison magnétique entre les roues d'actionnement dentées et les rotors permet avantageusement de limiter les frottements entre ces derniers et améliore par ailleurs l'étanchéité des vannes.

On comprend que chacune des roues d'actionnement dentées 24 de chacune des unités d'actionnement rotatives 17 est apte à être entrainée en rotation autour du premier axe de rotation R1, selon le premier sens de rotation S1 et le deuxième sens de rotation S2 évoqués précédemment.

Il convient par ailleurs de considérer que les vannes telles que décrites pourraient prendre d'autres formes et présenter par exemple et de manière non limitative un organe de contrôle pivotant au lieu d'être coulissant en translation verticale tel que décrit ci-dessus.

Tel que cela est visible sur les figures 1 à 5, le dispositif d'actionnement motorisé 14 est monté sur une platine 26. Plus précisément, le dispositif d'actionnement motorisé 14 ainsi que la roue d'actionnement dentée 24 de chacune des unités d'actionnement rotatives 17 sont montées sur la platine 26.

La platine 26 s'étend notamment dans un plan transversal T et longitudinal L. Selon l'exemple illustré, la platine 26 présente une forme sensiblement d'un quadrilatère mais on comprend qu'elle peut prendre tout autre forme de manière non limitative, tant que celle-ci lui permet de supporter au moins le dispositif d'actionnement motorisé 14 et les roues d'actionnement dentée 24 des vannes 12.

On comprend par ailleurs que la platine 26 forme un capot qui vient clore un boitier 27 dans lequel sont logés au moins le corps principal 16 des vannes 12 et les conduits d'entrée et de sortie de fluide associés.

Ainsi, on comprend également que la platine 26 comprend au moins des ouvertures traversantes, ici circulaires, au travers desquelles s'étendent chacun des arbres 18 des unités d'actionnement rotatives 17, de telle sorte que les roues d'actionnement dentée 24 s'étendent sur la platine 26, et à l'opposé verticalement du boitier 27 logeant les corps principaux 16 des vannes 12.

Par ailleurs, un couvercle, non visible, peut être disposé en recouvrement de la platine, à l'opposé du boiter, de telle sorte à protéger les différentes unités d'actionnement rotatives et le dispositif d'actionnement motorisé.

Le dispositif d'actionnement motorisé 14 selon l'exemple de l'invention illustré aux figures 1 et 2, comprend au moins un arbre moteur 28, une came 30, une roue moteur 32 dentée et quatre engrenages 34.

L'arbre moteur 28 particulièrement visible à la figure 5, s'étend verticalement et sensiblement au centre de la platine 26 au travers d'une ouverture traversante formée dans la platine 26.

L'arbre moteur 28 est mobile en rotation autour d'un deuxième axe de rotation R2 vertical, parallèle au premier axe de rotation R1 de chacune des roues d'actionnement dentées 24 évoquées précédemment.

L'arbre moteur 28 est notamment configuré pour être entrainé en rotation selon le premier sens de rotation S1 et le deuxième sens de rotation S2 évoqués précédemment, autour de son deuxième axe de rotation R2.

On comprend notamment que l'arbre moteur 28 est relié à un actionneur, non visible, par exemple un moteur électrique, assurant sa mise en rotation.

La came 30 et la roue moteur 32 dentée sont montées coaxialement sur l'arbre moteur 28.

On comprend notamment que la came 30 et la roue moteur 32 sont montées autour de l'arbre moteur 28 en étant superposées l'une sur l'autre selon le deuxième axe de rotation R2.

Dans l'exemple illustré de l'invention, la came 30 et la roue moteur 32 sont superposées verticalement de telle sorte que la came 30 s'étende verticalement entre la roue moteur 32 et la platine 26.

Ainsi, on comprend que l'arbre moteur 28 traverse l'ouverture traversante formée dans la platine 26 de telle sorte qu'il s'étende de part et d'autre de ladite platine 26, selon la direction verticale V, et au moins en partie dans le boitier 27. Par ailleurs, la came 30 et la roue moteur 32 sont montées autour de l'arbre moteur 28 de telle sorte qu'ils s'étendent sur la platine 26 à l'opposé verticalement du boitier 27.

Selon une caractéristique de l'invention, l'arbre moteur 28 comprend au moins deux systèmes à sens unique de rotation 36, chacun associé à la came 30 ou à la roue moteur 32. Ici, un premier système à sens unique de rotation 36a est associé à la came 30, et un deuxième système à sens unique de rotation 36b est associé à la roue moteur 32.

Chacun des systèmes à sens unique de rotation 36 est configuré pour être entrainé en rotation avec l'arbre moteur 28 selon un unique sens de rotation de ce dernier. Dit autrement, le premier système à sens unique de rotation 36a est configuré pour être lié en rotation avec l'arbre moteur 28 lorsqu'il est entrainé dans le premier sens de rotation S1 et découplé en rotation de l'arbre moteur 28 lorsqu'il est entrainé en rotation selon le deuxième sens de rotation S2, tandis que le deuxième système à sens unique de rotation 36b est configuré pour être lié en rotation avec l'arbre moteur 28 lorsqu'il est entrainé en rotation selon le deuxième sens de rotation S2 et est découplé en rotation de l'arbre moteur 28 lorsqu'il est entrainé en rotation suivant le premier sens de rotation S1.

Dit encore autrement, la came 30 associée au premier système à sens unique de rotation 36a est entrainée en rotation uniquement dans le premier sens de rotation S1 par l'arbre moteur 28 via le premier système à sens unique de rotation 36a, et la roue moteur 32 est entrainée en rotation uniquement dans le deuxième sens de rotation S2 par l'arbre moteur 28 via le deuxième système à sens unique de rotation 36b.

On comprend alors que la came 30 et la roue moteur 32 sont dissociées en rotation autour de l'arbre moteur 28.

Selon des exemples non limitatifs de l'invention, les systèmes à sens unique de rotation peuvent être des roues libres, des roues à cliquets ou des roues à rochets.

La came 30, particulièrement visible à la figure 4, présente la forme d'un disque délimité par un bord périphérique externe 38.

La came 30 comprend entre autres une surface de commande périphérique 40 prenant ici, et de manière non limitative, la forme d'un dégagement périphérique 40 de matière formée sur son bord périphérique externe 38, de telle sorte à former une encoche 40.

Dans la suite de la description, on différentiera le bord périphérique externe 38 qui s'étend en dehors de l'encoche 40 comme un bord de contact 39, et le bord périphérique externe 38 au niveau de l'encoche 40, nommé ci-après encoche 40.

On définit alors un fond 41 de l'encoche 40 depuis lequel s'étendent deux surfaces inclinées 43 rejoignant le bord de contact 39 évoqué précédemment. On comprend alors que le fond 41 de l'encoche est décalé radialement du bord de contact 39 de la came 30.

La fonction d'une telle encoche 40 sera évoquée plus loin dans la suite de la description.

Par ailleurs, la roue moteur 32 visible à la figure 3, présente une forme circulaire autour du deuxième axe de révolution de l'arbre moteur 28.

On définit un premier diamètre externe D1 de la came 30 pris en dehors de son encoche 40, et un deuxième diamètre externe D2 de la roue moteur 32, pris jusqu'à l'extrémité radiale de ses dents. Selon un exemple non limitatif de l'invention, le premier diamètre externe D1 et le deuxième diamètre externe D2 sont sensiblement identiques.

Tel que cela est particulièrement visible aux figures 3 et 4, les roues d'actionnement dentées 24 des quatre vannes 12 sont disposées autour de la came 30 et de la roue moteur 32. Plus particulièrement, les roues d'actionnement dentée 24 sont montées sur la platine 26 de telle sorte qu'elles soient à équidistance les unes des autres autour de la came 30 et de la roue moteur 32.

Par ailleurs, il est notable que chacune des roues d'actionnement dentées 24 de chacune des vannes 12 est à une distance radiale non nulle du bord périphérique externe 38 de la came 30 et de la roue moteur 32. Autrement dit, les roues d'actionnement dentées 24 sont espacées d'une distance non nulle de la came 30 et de la roue moteur 32.

Tel qu'évoqué précédemment, le dispositif d'actionnement motorisé 14 comprend quatre engrenages 34, visibles aux figures 2 à 4. On comprend notamment que chaque engrenage 34 est associé à l'une des roues d'actionnement dentée 24 de l'une des unités d'actionnement rotatives 17 de l'une des vannes 12 de l'ensemble 10.

Chaque engrenage 34 comprend au moins une première roue dentée 42 associée à un premier arbre 42a et une deuxième roue dentée 44 associée à un deuxième arbre 44a, la première roue dentée 42 et la deuxième roue dentée 44 étant liées en rotation et disposées tangentiellement à la came 30 et la roue moteur 32.

On comprend notamment que la première roue dentée 42 et la deuxième roue dentée 44 de chacun des engrenages 34 sont liées en rotation respectivement avec le premier arbre 42a et le deuxième arbre 44a.

Ainsi, et en rapport avec la figure 2, on définit des lumières oblongues 48 formées dans la platine 26 et configurées pour recevoir chacune le premier arbre 42a ou le deuxième arbre 44a de chacune de la première roue dentée 42 ou de la deuxième roue dentée 44 de chacun des engrenages 34.

Notamment, chacun du premier arbre 42a et du deuxième arbre 44a de chacun des engrenages 34 s'étend au travers respectivement d'une première lumière oblongue 48a et d'une deuxième lumière oblongue 48b.

Chacun du premier arbre 42a et du deuxième arbre 44a de chacun des engrenages 34 s'étend de part et d'autre de la platine 26 et au moins en partie dans le boitier 27 évoqué précédemment.

Les lumières oblongues 48 s'étendent principalement selon une direction radiale par rapport au deuxième axe de rotation R2 et de telle sorte à autoriser le déplacement radial du premier arbre 42a et du deuxième arbre 44a par rapport à la platine 26.

Dit autrement, les lumières oblongues 48 présentent un dimensionnement radial autorisant le déplacement radial du premier arbre 42a ou du deuxième arbre 44a qu'elles logent, par rapport à la platine 26 et selon le deuxième axe de rotation R2.

On comprend par ailleurs que les premières roues dentées 42 et les deuxièmes roues dentées 44 de chacun des engrenages 34 s'étendent sur la platine 26, à l'opposé verticalement du boitier 27.

Par ailleurs, dans l'exemple de l'invention illustré et de manière non limitative, la première roue dentée 42 et la deuxième roue dentée 44 de chacun des engrenages 34 sont continuellement liées en rotation l'une à l'autre.

Également, la première roue dentée 42 de chacun des engrenages 34 est liée en rotation à la roue d'actionnement dentée 24 de la vanne 12 associée. On comprend alors que la première roue dentée 42 de chacun des engrenages 34 est cinétiquement disposée entre la deuxième roue dentée 44 dudit engrenage 34 et la roue d'actionnement dentée 24 de la vanne 12 associée.

Selon une caractéristique de l'invention, chacun des engrenages 34 est associés à un support 46 mobile en translation sur la platine 26, et visible aux figures 2 et 4. Le support 46 de chacun des engrenages 34 est notamment disposé en recouvrement au moins des lumières oblongues 48 évoquées précédemment.

Le support 46 s'étend par ailleurs sur la platine 26, à l'opposé verticalement du boitier 27.

Selon l'exemple de l'invention illustré, la deuxième roue dentée 44 de chacun des engrenages 34 est montée sur un des supports 46 mobiles. Par ailleurs, la première roue dentée 42 de chacun des engrenages 34 est montée sur un doigt 52, dont les caractéristiques seront détaillées plus loin dans la suite de la description.

Le support 46 comprend notamment deux orifices de passage 47 du premier arbre 42a et du deuxième arbre 44a respectivement, de la première roue dentée 42 et de la deuxième roue dentée 44.

Les orifices de passage 47 de chacun des supports 46 sont notamment formés dans le support 46 de telle sorte qu'ils s'étendent en regard des lumières oblongues 48 évoquées précédemment.

Chacun des deuxièmes arbres 44a de chacun des engrenages 34 comprend alors au moins un bourrelet périphérique assurant son maintien vertical dans son orifice de passage formé sur le support 46. Le bourrelet périphérique est notamment formé de telle sorte qu'il n'entrave pas la rotation dudit arbre dans ledit orifice de passage.

On comprend par ailleurs que, bien que seule la deuxième roue dentée 44 de chacun des engrenages 34 soit montée sur le support 46, ce dernier est traversé à la fois par le premier arbre 42a et par le deuxième arbre 44a.

On définit alors un tronçon supérieur 53a et un tronçon inférieur 53b de chacun du premier arbre 42a et du deuxième arbre 44a de chacun des engrenages 34, qui s'étendent de part et d'autre du support 46.

De manière plus précise, le tronçon supérieur 53a de chacun du premier arbre 42a et du deuxième arbre 44a de chacun des engrenages 34 correspondent aux tronçons autour desquels s'étendent les premières et deuxièmes roues dentées 42, 44 tandis que le tronçon inférieur 53b de chacun du premier arbre 42a et du deuxième arbre 44a de chacun des engrenages 34 correspondent aux tronçons opposés par rapport au support 46 et qui s'étendent au moins en partie dans les premières lumières oblongues 48a et les deuxièmes lumières oblongues 48b de la platine 26 associées.

Chaque support 46 portant la deuxième roue dentée 44 de chacun des engrenages 34 est configuré pour se déplacer radialement en translation selon le deuxième axe de rotation R2, de telle sorte à déplacer la deuxième roue dentée 44 et son arbre 44a associé qu'ils portent, en translation selon ce même axe.

On comprend alors que le support 46 permet d'une part de maintenir verticalement l'arbre 44a de la deuxième roue dentées 44 associée, par rapport à la platine 26 et d'autre part de déplacer le deuxième arbre 44a de la deuxième roue dentée 44 de chacun des engrenages 34 dans la lumière oblongue 48b associée et formée dans la platine 26.

Le support 46 de chacun des engrenages 34 s'étend alors selon un périmètre sensiblement identique aux roues dentées 42, 44 de l'engrenage 34 qu'il supporte et de telle sorte qu'il forme au moins un ergot 50 qui s'étend radialement au-delà de la deuxième roue dentée 44 associée.

Plus particulièrement, l'ergot 50 de chacun des supports 46 s'étend radialement de telle sorte qu'il soit en contact avec le bord périphérique externe 38 de la came 30 tel que visible à la figure 4.

Dans l'exemple illustré de l'invention, l'ergot 50 de chacun des supports 46 s'étend radialement en regard de la deuxième roue dentée 44 de chacun des engrenages 34.

Selon l'exemple de l'invention illustré, le support 46 se présente sous la forme d'une plaquette en forme de L dont une branche comprend les deux orifices de passage 47 pour les arbres 42a, 44a, et l'autre branche forme l'ergot 50.

Tel que particulièrement visible aux figures 2 et 4, la doigt 52 mobile sur lequel est montée la première roue dentée 42, est monté sur la platine 26 autour de chacun des arbres 18 de chacune des vannes 12.

Le doigt 52 associé à chacun des arbres 18 de chacune des vannes 12 est notamment mobile en rotation autour de ce dernier tout en étant délié en rotation dudit arbre 18, par exemple par un roulement à billes.

Dit autrement, le doigt 52 se déplace en rotation autour de l'arbre 18 de la vanne 12 associée, sans être entrainé en rotation par ledit arbre 18.

On comprend notamment que les doigts 52 sont chacun montés autour d'un des arbres 18 et de telle sorte qu'ils soient désolidarisés en rotation de ces derniers.

Chacun des doigts 52 s'étend alors radialement selon le premier axe de rotation R1 vers la première roue dentée 42 de chacun des engrenages 34 et de telle sorte que le premier arbre 42a de chacune des premières roues dentées 42 s'étendent au travers d'un trou 54 formé sur chacun des doigts 52.

On comprend alors que le premier arbre 42a de chacune des premières roues dentées 42 de chacun des engrenages 34 s'étend à la fois au travers d'un des orifices de passage 47 du support 46 et au travers du trou 54 du doigt 52 associés, mais que ledit premier arbre 42a est monté sur le doigt 52.

Selon une caractéristique non limitative de l'invention, un moyen permettant de maintenir verticalement le premier arbre 42a de chacun des engrenages 34 dans le trou 54 du doigt 52 peut être prévu, tel qu'une rondelle ou encore un bourrelet périphérique tel que décrit précédemment pour le deuxième arbre 44a.

Tel que visible à la figure 4, chacun des doigts 52 comprend un ergot 56 qui s'étend radialement en regard de la première roue dentée 42 et vers la came 30, selon le deuxième axe de rotation R2, et de telle sorte que ledit ergot 56 soit en contact avec le bord périphérique externe 38 de la came 30.

La fonction de tels ergots 50, 56 portés par les supports 46 et les doigts 52 sera détaillée plus loin dans la suite de la description.

Selon une autre caractéristique de l'invention visible aux figures 3 et 4, le dispositif d'actionnement motorisé 14 comprend quatre éléments d'appui élastiques 58 disposés en contact tangentiel avec le support 46 et avec le doigt 52 de chacun des engrenages 34.

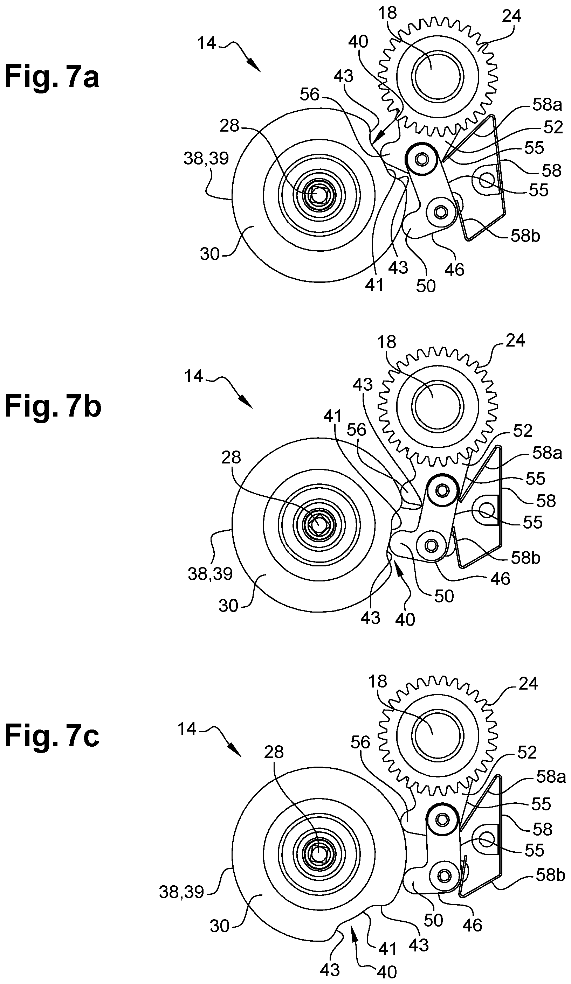

Chaque élément d'appui élastique 58 comprend alors au moins un premier bras élastique 58a et un deuxième bras élastique 58b qui s'étendent respectivement au contact du doigt 52 et du support 46 et visibles aux figures7a à 7c.

De manière plus précise, on définit une surface de contact 55 de chacun des doigts 52 et de chacun des support 46, les surfaces de contact 55 étant opposées radialement aux ergots 50, 56 de leur doigt 52 ou support 46 respectif, selon le deuxième axe de rotation R2.

Ainsi, le premier bras élastique 58a de chacun des éléments d'appui élastiques 58 est en appui contre la surface de contact 55 de chacun des doigts 52 et le deuxième bras élastique 58b de chacun des éléments d'appui élastiques 58 est en appui contre la surface de contact 55 de chacun des supports 46.

On comprend alors que les éléments d'appui élastiques 58 ont pour fonction de plaquer chacun des supports 46 et chacun des doigts 52 portant chacun des engrenages 34 contre le bord périphérique externe 38 de la came 30.

Par ailleurs, de tels éléments d'appui élastiques 58 sont également avantageux en ce qu'ils permettent d'exercer une force contre les surfaces de contact 55 suffisante pour permettre la liaison en rotation d'une des roues dentées 42, 44 d'un des engrenages 34 associés, avec la roue moteur 32, malgré un contact dent contre dent entre ladite roue moteur 32 et ladite roue dentée 42, 44 lors du déplacement en translation de ladite roue dentée 42, 44, tel qu'évoqué précédemment. En d'autres termes, la force exercée par les bras élastiques 58a, 58b contre les surfaces de contact 55 assure le glissement des dents des roues 32, 42, 44 en contact l'une contre l'autre de telle sorte à lier en rotation la roue moteur 32 avec l'une des roues dentées 42, 44.

Selon un exemple de l'invention non limitatif, l'élément d'appui élastique 58 est un ressort à lame. L'élément d'appui élastique 58 est par exemple solidaire de la platine 26 par vissage.

Le support 46 et le doigt 52 associés à chacun des engrenages 34, et notamment les ergots 50, 56 qu'ils portent, ont alors pour fonction d'écarter radialement la première roue dentée 42 ou la deuxième roue dentée 44 du bord périphérique externe 38 de la came 30.

Dit autrement, les ergots 50, 56 ont pour fonction d'écarter radialement les roues dentées 42, 44 de la roue moteur 32 de telle sorte que lesdites roues dentées 42, 44 soient déliées en rotation de la roue moteur 32 suivant une position angulaire de la came 30.

Ainsi, en fonction de la position angulaire de la came 30 et notamment en fonction de la position angulaire de l'encoche 40 de la came 30 par rapport à l'un des engrenages 34, une des roues dentées 42, 44 portées par le support 46 mobile et éventuellement par le doigt 52, peut commuter d'une position active à une position passive.

De manière plus précise, la première roue dentée 42 et la deuxième roue dentée 44 de chacun des engrenages 34 sont mobiles en translation radiale par rapport à l'arbre moteur 28 entre la position active dans laquelle la première roue dentée 42 ou la deuxième roue dentée 44 est engrainée en rotation par la roue moteur 32, et la position passive dans laquelle la première roue dentée 42 ou la deuxième roue dentée 44 est découplée de la roue moteur 32.

Une telle commutation entre la position active et la position passive est notamment rendue possible par la surface de commande périphérique 40 de la came 30, prenant ici la forme de l'encoche 40, qui permet de rapprocher radialement l'une des roues dentées 42, 44 de la roue moteur 32 en logeant l'ergot 50, 56 du support 46 ou du doigt 52.

En d'autres termes, l'encoche 40 de la came 30 permet de loger l'ergot 50, 56 du support 46 ou du doigt 52, mettant en contact tangentiel l'une des roues dentées 42, 44 qu'il porte avec la roue moteur 32, de telle sorte qu'elles soient liées en rotation.

Dit encore autrement, dans la position active de la première roue dentée 42 ou de la deuxième roue dentée 44, l'ergot 56, 50 respectivement du doigt 52 ou du support 46 est en contact avec le fond 41 de l'encoche 40 et dans la position passive de la première roue dentée 42 ou de la deuxième roue dentée 44, l'ergot 56, 50 respectivement du doigt 52 ou du support 46 est au contact du bord de contact 39 de la came 30 évoqué précédemment.

Ainsi, la came 30 est configurée pour prendre trois positions angulaires distinctes par rapport à chacun des engrenages 34, les trois positions angulaires distinctes étant visibles aux figures 7a à 7c.

Le fonctionnement et l'impact de chacune des trois positions angulaires de la came 30 vont maintenant être décrites en rapport avec les figures 7a à 8c.

On définit une première position angulaire de la came 30, visible à la figure 7a, correspondant à l'alignement radial de l'encoche 40 de la came 30 avec l'ergot 56 du doigt 52.

Ainsi, dans la première position angulaire de la came 30, l'ergot 56 du doigt 52 portant la première roue dentée 42 est en contact avec le fond 41 de l'encoche 40 de la came 30.

L'ergot 56 du doigt 52 est maintenu dans l'encoche 40 de la came 30 notamment au moyen du premier bras élastique 58a de l'élément d'appui élastique 58 qui exerce une force contre la surface de contact 55 du doigt 52 et en direction de la came 30.

Par ailleurs, on comprend que la configuration des lumières oblongues 48, en particulier la configuration de la première lumière oblongue 48a logeant le premier arbre 42a de la première roue dentée 42, permet à l'ergot 56 du doigt 52 de venir se loger dans l'encoche 40.

Une telle disposition de l'ergot 56 du doigt 52 dans l'encoche 40 réduit alors une distance radiale séparant la première roue dentée 42 de la roue moteur 32.

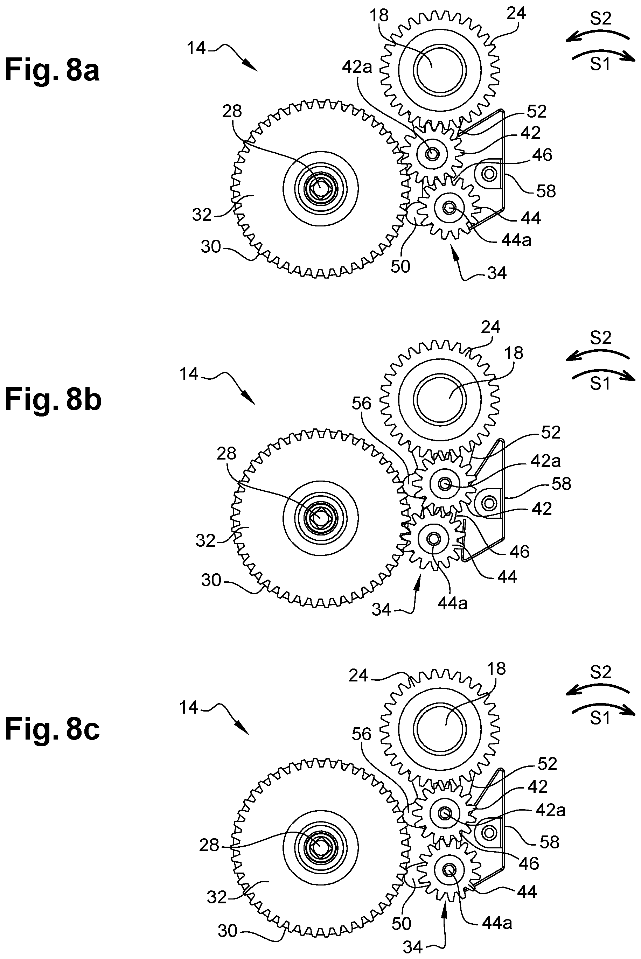

Ainsi, la première position angulaire de la came 30 positionne la première roue dentée 42 dans sa position active visible à la figure 8a.

Dit autrement, le logement de l'ergot 56 du doigt 52 dans l'encoche 40 tel que visible à la figure 7a, permet la liaison en rotation de la première roue dentée 42 avec la roue moteur 32, tel que visible à la figure 8a.

Ainsi, la rotation de la roue moteur 32 dans le deuxième sens de rotation S2 entraine en rotation la première roue dentée 42 selon le premier sens de rotation S1 qui elle-même entraine en rotation la roue d'actionnement dentée 24 associée selon le deuxième sens de rotation S2.

Par ailleurs, dans la première position angulaire de la came 30, l'ergot 50 du support 46 est au contact du bord de contact 39 de la came 30 de telle sorte que la distance radiale entre la deuxième roue dentée 44 et la roue moteur 32 est maintenue. Ceci permet d'empêcher leur liaison en rotation l'une à l'autre tel que visible à la figure 8a.

On définit une deuxième position angulaire de la came 30, visible à la figure 7b, et correspondant à l'alignement radial de l'encoche 40 de la came 30 avec l'ergot 50 du support 46.

On comprend alors qu'entre la première position angulaire de la came 30 visible à la figure 7a, et la deuxième position angulaire de la came 30, visible à la figure 7b, ladite came 30 a opérée une rotation selon le premier sens de rotation S1.

Ainsi, lors du passage de la première position angulaire de la came 30 à sa deuxième position angulaire, l'ergot 56 du doigt 52 entre en contact avec l'une des surfaces inclinée 43 de l'encoche 40 de telle sorte à être guidé en dehors de ladite encoche 40 jusqu'au bord de contact 39 de la came 30.

Également, lors du passage de la première position angulaire de la came 30 à sa deuxième position angulaire, l'ergot 50 du support 46 entre en contact avec l'autre surface inclinée 43 de l'encoche 40 de telle sorte à être guidée vers le fond 41 de cette dernière.

Le déplacement de l'ergot 56 du doigt 52 depuis le fond 41 de l'encoche 40 vers le bord de contact 39 de la came 30 engendre alors le déplacement en translation radiale la première roue dentée 42, par le déplacement radial de son premier arbre 42a dans la première lumière oblongue 48a associée.

On comprend alors que dans la deuxième position angulaire de la came 30, la première roue dentée 42 se délie en rotation de la roue moteur 32.

Par ailleurs, dans la deuxième position angulaire de la came 30 et telle que visible à la figure 7b, le logement de l'ergot 50 du support 46 dans l'encoche 40, engendre la liaison en rotation de la deuxième roue dentée 44 avec la roue moteur 32 tel que visible à la figure 8b, et tel que cela fut décrit précédemment pour la première roue dentée 42 à la figure 8a.

Ainsi, dans la deuxième position angulaire de la came 30, la roue moteur 28 entrainée en rotation selon le deuxième sens de rotation S2, entraine en rotation la deuxième roue dentée 44 selon le premier sens de rotation S1, qui elle-même entraine en rotation la première roue dentée selon le deuxième sens de rotation S2 pour finalement entrainer en rotation la roue d'actionnement dentée 24 selon le premier sens de rotation S1.

On définit une troisième positon angulaire de la came 30, visible à la figure 7c, correspondant à l'alignement radial du bord de contact 39 de la came 30 avec les ergots 56, 50 du doigt 52 et du support 46.

On comprend alors qu'entre la deuxième position angulaire de la came 30 visible à la figure 7b et la troisième position angulaire de la came 30 visible à la figure 7c, ladite came 30 a opérée une rotation selon le premier sens de rotation S1.

Ainsi, lors du passage de la deuxième position angulaire de la came 30 à sa troisième position angulaire, l'ergot 50 du support 46 entre en contact avec l'une des surfaces inclinées 43 de l'encoche 40 de telle sorte à être guidé en dehors de l'encoche 40 jusqu'au bord de contact 39 de la came 30.

On comprend qu'ainsi dans la troisième position angulaire de la came 30, les ergots 56, 50 du doigt 52 et du support 46 sont en contact avec le bord de contact 39 de la came 30 de telle sorte que la première roue dentée 42 et la deuxième roue dentée 44 soient toutes deux déliées en rotation de la roue moteur 32, tel que cela est visible à la figure 8c.

Ainsi, on comprend que dans la troisième position angulaire de la came 30, la roue d'actionnement dentée 24 est immobile en rotation.

On comprend par ailleurs que la profondeur radiale de l'encoche 40 de la came 30 et que la profondeur radiale de l'ergot 50, 56 de chacun des supports 46 et doigts 52 sont configurées de telle sorte que le logement des ergots 50, 56 dans l'encoche 40 rende possible la liaison en rotation des roues dentées 42, 44 avec la roue moteur 32 tel que cela est visible aux figures 8a et 8b.

On tire ainsi avantage des supports 46 associés à la première roue dentée 42 et la deuxième roue dentée 44 de chacun des engrenages 34 en ce qu'ils permettent de maintenir un entraxe constant entre les deux roues dentées 42, 44 d'un même engrenage 34, sans que celles-ci ne se dissocie en rotation l'une de l'autre malgré le mouvement radial de l'une ou l'autre des roues dentées 42, 44 tel qu'évoqué précédemment.

De même, la première roue dentée 42 de chacun des engrenages 34 portée à la fois par le support 46 et par le doigt 52, assure la liaison en rotation constante de ladite première roue dentée 42 avec la roue d'actionnement dentée 24 et la deuxième roue dentée 44 malgré le déplacement radial de l'une ou l'autre de la première roue dentée 42 ou de la deuxième roue dentée 44.

Ainsi, le support 46 et le doigt 52 de chacun des engrenages 34 permet de conserver une continuité cinétique constante entre les roues dentées 42, 44 et la roue d'actionnement dentée 24 associée, malgré les déplacements des roues dentées 42, 44 tels qu'évoqués précédemment.

Par ailleurs, lors du déplacement radial de l'une ou l'autre de la première roue dentée 42 ou de la deuxième roue dentée 44, on comprend que le support pivote autour du premier arbre 42a ou du deuxième arbre 44a.

Le procédé de pilotage de l'ensemble 10 tel qu'il vient d'être décrit précédemment va maintenant être décrit au moyen des figures 1 à 8c.

Le procédé comprend notamment une étape préliminaire au cours de laquelle l'une des vannes 12 est choisie pour être pilotée par le dispositif d'actionnement motorisé 14. Plus particulièrement, lors de l'étape préliminaire, on sélectionne l'unité d'actionnement rotative 17 à piloter, ainsi que le sens de rotation désiré de la roue d'actionnement dentée 24 associée.

On comprend notamment que le sens de rotation désiré de la roue d'actionnement dentée 24 est déterminé suivant le sens de translation T1, T2 désiré de l'organe de contrôle 22 de telle sorte à ouvrir ou fermer l'ouverture d'entrée du fluide de la vanne 12 choisie.

On entend par le pilotage, le fait que la roue d'actionnement dentée 24 associée à la vanne 12 choisie est entrainée en rotation selon l'un ou l'autre du premier sens de rotation S1 ou du deuxième sens de rotation S2 afin d'autoriser ou non le passage du fluide en son sein.

Par la suite, une fois la vanne 12 choisie, le procédé comprend une première étape au cours de laquelle l'arbre moteur 28 est entrainé en rotation selon le premier sens de rotation S1 de telle sorte à déplacer angulairement la came 30 autour du deuxième axe de rotation R2 selon le premier sens de rotation S1. De manière plus précise la came 30 est déplacée selon le premier sens de rotation S1, en regard radialement de l'engrenage 34 associé à la vanne12 choisie à l'étape préliminaire.

Ainsi, on comprend qu'à la première étape, la came 30 est positionnée, par la rotation de l'arbre moteur 28 selon son premier sens de rotation S1, selon l'une ou l'autre de sa première position angulaire ou de sa deuxième position angulaire par rapport à l'engrenage 30 associé à la vanne 12 choisie à l'étape préliminaire.

De la sorte, par rapport à l'engrenage 34 considéré, la came 30 est disposée de telle sorte que son encoche 40 loge l'ergot 50 du support 46 tel que visible à la figure 7b, ou l'ergot 56 du doigt 52 tel que visible à la figure 7a.

Ainsi, on comprend que lors de cette première étape on rapproche radialement l'une ou l'autre de la première roue dentée 42 ou de la deuxième roue dentée 44 de la roue moteur 32.

Une fois la position angulaire de la came 30 définie et mise en œuvre, à une deuxième étape, l'arbre moteur 28 est entrainé en rotation selon le deuxième sens de rotation S2 de telle sorte à entrainer en rotation la roue moteur 32 autour du deuxième axe de rotation R2 selon le deuxième sens de rotation S2.

Ainsi, suivant la position angulaire de la came 30, la roue moteur entraine la première roue dentée 42 selon le premier sens de rotation S1 tel que visible à la figure 8a ou entraine la deuxième roue dentée 44 selon le premier sens de rotation S1, tel que visible à la figure 8b.

Ainsi, tel qu'évoqué précédemment, lorsque la deuxième roue dentée 44 est entrainée en rotation selon le premier sens de rotation S1, tel que visible à la figure 8b, elle entraine en rotation la première roue dentée 42 selon le deuxième sens de rotation S2 qui elle-même entraine en rotation la roue d'actionnement dentée 24 associée selon le premier sens de rotation S1.

On comprend également que dans le cas où la came 30 est positionnée dans sa première position angulaire, telle que visible à la figure 7a, la mise en œuvre de la deuxième étape entraine la première roue dentée 42 selon le premier sens de rotation S1, ayant pour effet d'entrainer la roue d'actionnement dentée 24 selon le deuxième sens de rotation S2 tel que visible à la figure 8a.

Ainsi, la deuxième étape permet d'ouvrir ou fermer l'ouverture d'entrée de fluide dans la vanne 12 choisie à l'étape préliminaire, suivant les conditions évoquées ci-dessus.

Par la suite, à une troisième étape, une autre vanne 12 de l'ensemble 10, distincte de la vanne 12 de l'étape préliminaire, est choisie pour être pilotée par le dispositif d'actionnement motorisé 14.

Ainsi, à une quatrième étape, la came 30 est disposée dans sa troisième position angulaire, visible à la figure 7c, par rapport au précédent engrenage 34 de la première étape et dans sa première position angulaire ou deuxième position angulaire par rapport à l'engrenage 34 de la nouvelle vanne 12 considérée à la troisième étape.

On comprend qu'ainsi, on peut piloter de manière alternative chacune des quatre vannes 12 de l'ensemble 10 au moyen d'un unique dispositif d'actionnement motorisé 14.

On comprend également que le pilotage d'une autre vanne 12 à la troisième étape ne modifie pas la configuration de la vanne 12 précédente, pilotée lors des première et deuxième étapes. En d'autres termes, le dispositif d'actionnement motorisé 14 selon l'invention, permet avantageusement de piloter plusieurs vannes 12 sans que le pilotage d'une des vannes 12 ne modifie la position déterminée, ouverte ou fermée, d'une précédente vanne 12 pilotée.

L'invention n'est cependant pas limitée à cette configuration du dispositif d'actionnement motorisé et il convient de considérer que les engrenages pourraient prendre un autre emplacement sur la platine tant que ceux-ci permettent de piloter la rotation de la roue d'actionnement dentée de chacune des vannes de manière alternative.

## Revendications

1. Ensemble (10) pour la commande de vannes (12) comprenant une platine (26) équipée d'au moins deux unités d'actionnement rotatives (17) prévues pour commander respectivement au moins deux vannes (12) et équipée d'un dispositif d'actionnement motorisé (14) commun à chaque unité d'actionnement rotative (17), chaque unité d'actionnement rotative (17) comprenant au moins une roue d'actionnement dentée (24) destinée à être entrainée en rotation autour d'un premier axe de rotation (R1) et suivant deux sens de rotation (S1, S2) opposés, le dispositif d'actionnement motorisé (14) comprenant au moins :
- un arbre moteur (28) autour duquel sont montés coaxialement un organe rotatif (30) et une roue moteur (32) dentée, l'arbre moteur (28) étant mobile en rotation autour d'un deuxième axe de rotation (R2) suivant les deux sens de rotation (S1, S2), l'organe rotatif (30) et la roue moteur (32) étant liés en rotation avec l'arbre moteur (28) chacun suivant le premier sens de rotation (S1) ou le deuxième sens de rotation (S2),
- au moins un engrenage (34) comprenant au moins une première roue dentée (42) et une deuxième roue dentée (44) liées en rotation et disposées tangentiellement au moins à la roue moteur (32) et de telle sorte qu'au moins l'une de la première roue dentée (42) ou de la deuxième roue dentée (44) soit apte à entrainer en rotation la roue d'actionnement dentée (24) de l'une des vannes (12),
l'organe rotatif (30) étant configuré de telle sorte qu'il présente au moins trois positions angulaires distinctes suivant le deuxième axe de rotation (R2), dans lesquelles une première position angulaire de l'organe rotatif (30) provoque le déplacement de l'engrenage (34) de telle sorte à entrainer en rotation une roue d'actionnement dentée (24) de l'une des vannes (12) selon le deuxième sens de rotation (S2), une deuxième position angulaire de l'organe rotatif (30) provoque le déplacement de l'engrenage (34) de telle sorte à entrainer en rotation une roue d'actionnement dentée (24) de l'une des vannes (12) selon le premier sens de rotation (S1) et une troisième position angulaire de l'organe rotatif (30) provoque une immobilisation rotative de la roue d'actionnement dentée (24) de la vanne (12) considérée.

2. Ensemble (10) selon la revendication précédente, dans lequel l'organe rotatif (30) est une came (30), la came (30) étant liée en rotation avec l'arbre moteur (28) dans le premier sens de rotation (S1) de l'arbre moteur (28) et découplée en rotation dans le deuxième sens de rotation (S2) de l'arbre moteur (28), et la roue moteur (32) étant liée en rotation avec l'arbre moteur (28) dans le deuxième sens de rotation (S2) et découplée en rotation de l'arbre moteur (28) dans le premier sens de rotation (S1), la came (30) présentant une forme sensiblement circulaire délimitée par un bord périphérique externe (38) et comprenant une surface de commande périphérique (40),
le dispositif d'actionnement motorisé (14) comprenant au moins deux engrenages (34), chacun des engrenages (34) comprenant la première roue dentée (42) et la deuxième roue dentée (44), liées en rotation et disposées tangentiellement à la came (30) et la roue moteur (32), chacun des engrenages (34) étant associé à l'une des roues d'actionnement dentée (24) de l'une des vannes (12) de telle sorte que :
∘ au moins la première roue dentée (42) de chacun des engrenages (34) est liée en rotation à la roue d'actionnement dentée (24) de la vanne (12) associée,
∘ la première roue dentée (42) et la deuxième roue dentée (44) de chacun des engrenages (34) sont mobiles en translation selon des directions radiales, par rapport à l'arbre moteur (28) entre une position active dans laquelle la première roue dentée (42) ou la deuxième roue dentée (44) est engrainée par la roue moteur (32), et une position passive dans laquelle la première roue dentée (42) ou la deuxième roue dentée (44) est découplée de la roue moteur (32),
la came (30) étant configurée de telle sorte que la première position angulaire de la came (30) positionne la première roue dentée (42) en position active, la deuxième position angulaire de la came (30) positionne la deuxième roue dentée (44) en position active, et la troisième position angulaire de la came (30) positionne la première roue dentée (42) et la deuxième roue dentée (44) en position passive.

3. Ensemble (10) selon la revendication précédente, dans lequel la surface de commande périphérique (40) de la came (30) est un dégagement périphérique de matière formant une encoche (40).

4. Ensemble (10) selon l'une quelconque des revendications 2 ou 3, dans lequel chacune de la première roue dentée (42) et de la deuxième roue dentée (44) de chacun des engrenages (34) est associée en rotation respectivement à un premier arbre (42a) et un deuxième arbre (44a), la platine (26) comprenant des lumières oblongues (48) dans lesquelles s'étendent un des premiers ou deuxièmes arbres (42a, 44a) et de telle sorte à autoriser le déplacement radial desdits arbres (42a, 44a) par rapport à la platine (26) et selon le deuxième axe de rotation (R2).

5. Ensemble (10) selon la revendication 4, comprenant au moins un support (46) mobile en translation configuré pour supporter au moins la première roue dentée (42) et la deuxième roue dentée (44) d'au moins un des engrenages (34) et de telle sorte qu'il autorise le déplacement en translation radiale du premier arbre (42a) et du deuxième arbre (44a) dans leur lumière oblongue (48) respective.

6. Ensemble (10) selon la revendication précédente, dans lequel le support (46) comprend au moins un ergot (50) qui s'étend en regard de l'une des roues dentées (42, 44) portée par le support (46) et de telle sorte que ledit ergot (50) soit au contact du bord périphérique externe (38) de la came (30).

7. Ensemble (10) selon la revendication précédente, dans lequel chacune des premières roues dentées (42) de chacun des engrenages (34) est portée par le support (46) et par un doigt (52) autorisant le déplacement en translation radiale du premier arbre (42a) dans la lumière oblongue (48) associée, le doigt (52) comprenant au moins un ergot (56) qui s'étend radialement de telle sorte qu'il soit en contact du bord périphérique externe (38) de la came (30).

8. Ensemble (10) selon les revendications 6 et 7, dans lequel l'ergot (50) du support (46) s'étend radialement en regard de la deuxième roue dentée (44) et l'ergot (56) du doigt (52) s'étend radialement en regard de la première roue dentée (42) de chacun des engrenages (34).

9. Ensemble (10) selon les revendications 4 à 8, dans lequel, par rapport à l'un des engrenages (34), la première position angulaire de la came (30) correspond au contact de l'encoche (40) de la came (30) avec l'ergot (56) du doigt (52),
la deuxième position angulaire de la came (30) correspond au contact de l'encoche (40) de la came (30) avec l'ergot (50) du support (46),
et la troisième position angulaire de la came (30) correspond au contact du bord périphérique externe (38) de la came (30), distinct de l'encoche (40), avec l'ergot (50) du support (46) et l'ergot (56) du doigt (52).

10. Ensemble (10) selon l'une quelconque des revendications précédentes en combinaison avec la revendication 5, dans lequel le dispositif d'actionnement motorisé (14) comprend au moins un élément d'appui élastique (58) disposé en contact tangentiel au moins avec le support (46) des roues dentées (42, 44) de telle sorte à plaquer ledit support (46) contre le bord périphérique externe (38) de la came (30).

11. Ensemble (10) selon la revendication précédente, dans lequel l'élément d'appui élastique (58) est un ressort à lame.

12. Procédé de pilotage d'un ensemble (10) selon l'une quelconque des revendications 2 à 11, comprenant au moins :
- une étape préliminaire de sélection de l'unité d'actionnement rotative (17) et du sens de rotation (S1, S2) désiré de la roue d'actionnement dentée (24) associée,
- une première étape au cours de laquelle l'arbre moteur (28) est entrainé en rotation selon le premier sens de rotation (S1) de telle sorte à déplacer angulairement la came (30) autour du deuxième axe de rotation (R2) selon le premier sens de rotation (S1) suivant l'une de ses positions angulaires, en fonction du sens de rotation (S1, S2) désiré de la roue d'actionnement dentée (24) de l'étape préliminaire,
- puis une deuxième étape au cours de laquelle l'arbre moteur (28) est entrainé en rotation selon le deuxième sens de rotation (S2) de telle sorte à entrainer en rotation la roue moteur (32) selon le deuxième sens de rotation (S2) et ainsi entrainer en rotation la roue d'actionnement dentée (24) de l'unité d'actionnement rotative (17) de l'étape préliminaire suivant le premier sens de rotation (S1) ou le deuxième sens de rotation (S2) choisi à l'étape préliminaire et via la position angulaire de la came (30) de la première étape.

## Patentansprüche

1. Baugruppe (10) für die Steuerung von Ventilen (12), umfassend eine Platte (26), die mit mindestens zwei Drehbetätigungseinheiten (17) ausgestattet ist, die jeweils zum Steuern von mindestens zwei Ventilen (12) vorgesehen sind, und mit einer motorisierten Betätigungsvorrichtung (14) ausgestattet sind, die jeder Drehbetätigungseinheit (17) gemeinsam ist, jede Drehbetätigungseinheit (17) umfassend mindestens ein gezahntes Betätigungsrad (24), das dazu bestimmt ist, um eine erste Drehachse (R1) und in zwei entgegengesetzte Drehrichtungen (S1, S2) drehend angetrieben zu werden, die motorisierte Betätigungsvorrichtung (14) umfassend mindestens:
- eine Motorwelle (28), um die ein Drehelement (30) und ein gezahntes Motorrad (32) koaxial montiert sind, wobei die Motorwelle (28) um eine zweite Drehachse (R2) in die zwei Drehrichtungen (S1, S2) drehbar ist, wobei das Drehelement (30) und das Motorrad (32) jeweils in die erste Drehrichtung (S1) oder die zweite Drehrichtung (S2) mit der Motorwelle (28) drehfest verbunden sind,
- mindestens ein Getriebe (34), umfassend mindestens ein erstes Zahnrad (42) und ein zweites Zahnrad (44), die drehfest miteinander verbunden und mindestens zu dem Motorrad (32) tangential angeordnet sind, und zwar so, dass mindestens eines von dem ersten Zahnrad (42) und dem zweiten Zahnrad (44) geeignet ist, um das Betätigungszahnrad (24) eines der Ventile (12) drehend anzutreiben,
wobei das Drehelement (30) so konfiguriert ist, dass es entlang der zweiten Drehachse (R2) mindestens drei unterschiedliche Winkelpositionen aufweist, wobei eine erste Winkelposition des Drehelements (30) die Verschiebung des Getriebes (34) so bewirkt, dass ein gezahntes Betätigungsrad (24) eines der Ventile (12) in die zweite Drehrichtung (S2) drehend angetrieben wird, eine zweite Winkelposition des Drehelements (30) die Verschiebung des Getriebes (34) so bewirkt, dass ein gezahntes Betätigungsrad (24) eines der Ventile (12) in die erste Drehrichtung (S1) drehend angetrieben wird, und eine dritte Winkelposition des Drehelements (30) eine Drehblockierung des gezahnten Betätigungsrads (24) des betreffenden Ventils (12) bewirkt.

2. Baugruppe (10) nach dem vorstehenden Anspruch, wobei das Drehelement (30) ein Nocken (30) ist, wobei der Nocken (30) mit der Motorwelle (28) in die erste Drehrichtung (S1) der Motorwelle (28) drehverbunden ist und in die zweite Drehrichtung (S2) von der Motorwelle (28) drehentkoppelt ist, und das Motorrad (32) mit der Motorwelle (28) in die zweite Drehrichtung (S2) drehverbunden ist und in die erste Drehrichtung (S1) von der Motorwelle (28) drehentkoppelt ist, wobei der Nocken (30) eine im Wesentlichen kreisförmige Form aufweist, die durch eine äußere Umfangskante (38) begrenzt wird und eine Umfangssteueroberfläche (40) umfasst,
die motorisierte Betätigungsvorrichtung (14) umfassend mindestens zwei Getriebe (34), jedes der Getriebe (34) umfassend das erste Zahnrad (42) und das zweite Zahnrad (44), die drehfest miteinander verbunden und tangential zu dem Nocken (30) und dem Motorrad (32) angeordnet sind, wobei jedes der Getriebe (34) mit einem der Betätigungszahnräder (24) eines der Ventile (12) so verknüpft ist, dass:
o mindestens das erste Zahnrad (42) jedes der Getriebe (34) mit dem Betätigungszahnrad (24) des verknüpften Ventils (12) drehfest verbunden ist,
∘ das erste Zahnrad (42) und das zweite Zahnrad (44) jedes der Getriebe (34) in radiale Richtungen relativ zu der Motorwelle (28) zwischen einer aktiven Position, in der das erste Zahnrad (42) oder das zweite Zahnrad (44) mit dem Motorrad (32) in Eingriff steht, und einer passiven Position, in der das erste Zahnrad (42) oder das zweite Zahnrad (44) von dem Motorrad (32) entkoppelt ist, translatorisch bewegbar sind,
wobei der Nocken (30) so konfiguriert ist, dass die erste Winkelposition des Nockens (30) das erste Zahnrad (42) in der aktiven Position positioniert, die zweite Winkelposition des Nockens (30) das zweite Zahnrad (44) in der aktiven Position positioniert und die dritte Winkelposition des Nockens (30) das erste Zahnrad (42) und das zweite Zahnrad (44) in der passiven Position positioniert.

3. Baugruppe (10) nach dem vorstehenden Anspruch, wobei die Umfangssteueroberfläche (40) des Nockens (30) eine Umfangsmaterialaussparung ist, die eine Kerbe (40) ausbildet.

4. Baugruppe (10) nach einem der Ansprüche 2 oder 3, wobei das erste Zahnrad (42) und das zweite Zahnrad (44) jedes der Getriebe (34) jeweils mit einer ersten Welle (42a) und einer zweiten Welle (44a) drehfest verknüpft sind, die Platte (26) umfassend längliche Schlitze (48), in denen sich eine der ersten oder der zweiten Welle (42a, 44a) erstreckt, und zwar so, dass die radiale Verschiebung der Wellen (42a, 44a) relativ zu der Platte (26) und entlang der zweiten Drehachse (R2) zugelassen ist.

5. Baugruppe (10) nach Anspruch 4, die mindestens eine translatorisch bewegbare Halterung (46) umfasst, die zum Tragen mindestens des ersten Zahnrads (42) und des zweiten Zahnrads (44) von mindestens einem der Getriebe (34) konfiguriert ist, und zwar so, dass die radiale Translationsverschiebung der ersten Welle (42a) und der zweiten Welle (44a) in ihrem jeweiligen länglichen Schlitz (48) zugelassen ist.

6. Baugruppe (10) nach dem vorstehenden Anspruch, wobei der Träger (46) mindestens einen Ansatz (50) umfasst, der sich gegenüber einem der Zahnräder (42, 44) erstreckt, die durch den Träger (46) gestützt werden, und zwar so, dass der Ansatz (50) mit der äußeren Umfangskante (38) des Nockens (30) in Kontakt steht.

7. Baugruppe (10) nach dem vorstehenden Anspruch, wobei jedes der ersten Zahnräder (42) jedes der Getriebe (34) durch den Träger (46) und durch einen Finger (52) gestützt wird, der die radiale Translationsverschiebung der ersten Welle (42a) in dem verknüpften länglichen Schlitz (48) zulässt, der Finger (52) umfassend mindestens einen Ansatz (56), der sich radial so erstreckt, dass er mit der äußeren Umfangskante (38) des Nockens (30) in Kontakt steht.

8. Baugruppe (10) nach den Ansprüchen 6 und 7, wobei sich der Ansatz (50) des Trägers (46) radial gegenüber dem zweiten Zahnrad (44) erstreckt und sich der Ansatz (56) des Fingers (52) radial gegenüber dem ersten Zahnrad (42) jedes der Getriebe (34) erstreckt.

9. Baugruppe (10) nach den Ansprüchen 4 bis 8, wobei die erste Winkelposition des Nockens (30) in Bezug auf eines der Getriebe (34) dem Kontakt der Kerbe (40) des Nockens (30) mit dem Ansatz (56) des Fingers (52) entspricht,
die zweite Winkelposition des Nockens (30) dem Kontakt der Kerbe (40) des Nockens (30) mit dem Ansatz (50) des Trägers (46) entspricht,
und die dritte Winkelposition des Nockens (30) dem Kontakt der äußeren Umfangskante (38) des Nockens (30), die sich von der Kerbe (40) unterscheidet, mit dem Ansatz (50) des Trägers (46) und dem Ansatz (56) des Fingers (52) entspricht.

10. Baugruppe (10) nach einem der vorstehenden Ansprüche in Kombination mit Anspruch 5, wobei die motorisierte Betätigungsvorrichtung (14) mindestens ein elastisches Anlageelement (58) umfasst, das in tangentialem Kontakt mindestens mit dem Träger (46) der Zahnräder (42, 44) so angeordnet ist, dass der Träger (46) gegen die äußere Umfangskante (38) des Nockens (30) drückt.

11. Baugruppe (10) nach dem vorstehenden Anspruch, wobei das elastische Anlageelement (58) eine Blattfeder ist.

12. Verfahren zum Lenken einer Baugruppe (10) nach einem der Ansprüche 2 bis 11, umfassend mindestens:
- einen vorbereitenden Schritt zum Auswählen der Drehbetätigungseinheit (17) und der gewünschten Drehrichtung (S1, S2) des verknüpften Betätigungszahnrads (24),
- einen ersten Schritt, während dem die Motorwelle (28) in die erste Drehrichtung (S1) drehend angetrieben wird, um den Nocken (30) um die zweite Drehachse (R2) in die erste Drehrichtung (S1) entsprechend einer seiner Winkelpositionen in Abhängigkeit von der gewünschten Drehrichtung (S1, S2) des gezahnten Betätigungsrads (24) des vorbereitenden Schritts winkelmäßig zu verschieben,
- dann einen zweiten Schritt, während dem die Motorwelle (28) in die zweite Drehrichtung (S2) drehend angetrieben wird, um das Motorrad (32) in die zweite Drehrichtung (S2) drehend anzutreiben und somit das Zahnbetätigungsrad (24) der Drehbetätigungseinheit (17) des vorbereitenden Schritts in die erste Drehrichtung (S1) oder die zweite Drehrichtung (S2), die in dem vorbereitenden Schritt ausgewählt wird, und über die Winkelposition des Nockens (30) des ersten Schritts drehend anzutreiben.

## Claims

1. Assembly (10) for controlling valves (12) comprising a plate (26) equipped with at least two rotary actuator units (17) designed to control at least two valves (12) respectively and equipped with a motorised actuator device (14) common to each rotary actuator unit (17), each rotary actuator unit (17) comprising at least one toothed actuating wheel (24) designed to be driven in rotation about a first axis of rotation (R1) and in two opposite directions of rotation (S1, S2), the motorised actuator device (14) comprising at least:
- a motor shaft (28) around which a rotating member (30) and a toothed motor wheel (32) are mounted coaxially, the motor shaft (28) being rotatable about a second axis of rotation (R2) in both directions of rotation (S1, S2), the rotating member (30) and the toothed motor wheel (32) being connected in rotation to the motor shaft (28), each in the first direction of rotation (S1) or the second direction of rotation (S2),
- at least one gear (34) comprising at least a first gear wheel (42) and a second gear wheel (44) connected in rotation and arranged tangentially at least to the motor wheel (32) and such that at least one of the first gear wheel (42) or the second gear wheel (44) is capable of driving the toothed actuating wheel (24) of one of the valves (12) in rotation,
the rotating member (30) being configured such that it has at least three distinct angular positions along the second axis of rotation (R2), in which a first angular position of the rotating member (30) causes the gear (34) to move so as to drive a toothed actuating wheel (24) of one of the valves (12) in rotation in the second direction of rotation (S2), a second angular position of the rotating member (30) causes the gear (34) to move so as to drive a toothed actuating wheel (24) of one of the valves (12) in rotation in the first direction of rotation (S1), and a third angular position of the rotating member (30) causes the toothed actuating wheel (24) of the valve (12) in question to be immobilised in rotation.

2. Assembly (10) according to the preceding claim, wherein the rotating member (30) is a cam (30), the cam (30) being rotationally connected to the motor shaft (28) in the first direction of rotation (S1) of the motor shaft (28) and rotationally decoupled in the second direction of rotation (S2) of the motor shaft (28), and the motor wheel (32) being rotationally connected to the motor shaft (28) in the second direction of rotation (S2) and rotationally decoupled from the motor shaft (28) in the first direction of rotation (S1), the cam (30) having a substantially circular shape delimited by an outer peripheral edge (38) and comprising a peripheral control surface (40),
the motorised actuator device (14) comprising at least two gears (34), each of the gears (34) comprising the first gear wheel (42) and the second gear wheel (44), connected in rotation and arranged tangentially to the cam (30) and the motor wheel (32), each of the gears (34) being associated with one of the toothed actuating wheels (24) of one of the valves (12) such that:
∘ at least the first gear wheel (42) of each of the gears (34) is connected in rotation to the tooth actuating wheel (24) of the associated valve (12),
∘ the first gear wheel (42) and the second gear wheel (44) of each of the gears (34) are movable in translation in radial directions relative to the motor shaft (28) between an active position , in which the first gear wheel (42) or the second gear wheel (44) is meshed with the motor wheel (32), and a passive position in which the first gear wheel (42) or the second gear wheel (44) is disengaged from the motor wheel (32),
the cam (30) being configured such that the first angular position of the cam (30) positions the first gear wheel (42) in the active position, the second angular position of the cam (30) positions the second gear wheel (44) in the active position, and the third angular position of the cam (30) positions the first gear wheel (42) and the second gear wheel (44) in the passive position.

3. Assembly (10) according to the previous claim, wherein the peripheral control surface (40) of the cam (30) is a peripheral recess of material forming a notch (40).

4. Assembly (10) according to any of claims 2 or 3, wherein each of the first gear wheel (42) and the second gear wheel (44) of each of the gears (34) is rotationally associated respectively with a first shaft (42a) and a second shaft (44a), the plate (26) comprising oblong openings (48) in which one of the first or second shafts (42a, 44a) extends and such as to allow radial movement of said shafts (42a, 44a) relative to the plate (26) and along the second axis of rotation (R2).

5. Assembly (10) according to claim 4, comprising at least one translationally movable support (46) configured to support at least the first gear wheel (42) and the second gear wheel (44) of at least one of the gears (34) and such that it allows radial translational movement of the first shaft (42a) and the second shaft (44a) in their respective oblong openings (48).

6. Assembly (10) according to the previous claim, in which the support (46) comprises at least one lug (50) which extends opposite one of the gear wheels (42, 44) carried by the support (46) and such that said lug (50) is in contact with the outer peripheral edge (38) of the cam (30).

7. Assembly (10) according to the previous claim, wherein each of the first gear wheels (42) of each of the gears (34) is carried by the support (46) and by a finger (52) allowing radial translational movement of the first shaft (42a) in the associated oblong opening (48), the finger (52) comprising at least one lug (56) which extends radially so as to be in contact with the outer peripheral edge (38) of the cam (30).

8. Assembly (10) according to claims 6 and 7, in which the lug (50) of the support (46) extends radially opposite the second gear wheel (44) and the lug (56) of the finger (52) extends radially opposite the first gear wheel (42) of each of the gears (34).

9. Assembly (10) according to claims 4 to 8, in which, relative to one of the gears (34), the first angular position of the cam (30) corresponds to the contact of the notch (40) of the cam (30) with the lug (56) of the finger (52),
the second angular position of the cam (30) corresponds to contact between the notch (40) of the cam (30) and the lug (50) of the support (46),
and the third angular position of the cam (30) corresponds to contact between the outer peripheral edge (38) of the cam (30), distinct from the notch (40), and the lug (50) of the support (46) and the lug (56) of the finger (52).

10. Assembly (10) according to any of the preceding claims in combination with claim 5, wherein the motorised actuator device (14) comprises at least one elastic support element (58) disposed in tangential contact at least with the support (46) of the gear wheels (42, 44) so as to press said support (46) against the outer peripheral edge (38) of the cam (30).

11. Assembly (10) according to the previous claim, wherein the elastic support element (58) is a leaf spring.

12. Method for controlling an assembly (10) according to any of claims 2 to 11, comprising at least:
- a preliminary step of selecting the rotary actuator unit (17) and the desired direction of rotation (S1, S2) of the associated toothed actuating wheel (24),
- a first step during which the motor shaft (28) is rotated in the first direction of rotation (S1) so as to angularly move the cam (30) about the second axis of rotation (R2) in the first direction of rotation (S1) to one of its angular positions, depending on the desired direction of rotation (S1, S2) of the toothed actuating wheel (24) in the preliminary step,
- then a second step during which the motor shaft (28) is rotated in the second direction of rotation (S2) so as to rotate the motor wheel (32) in the second direction of rotation (S2) and thus rotate the toothed actuating wheel (24) of the rotary drive unit (17) of the preliminary step in the first direction of rotation (S1) or the second direction of rotation (S2) selected in the preliminary step and via the angular position of the cam (30) of the first step.
